# EUROPÄISCHE PATENTSCHRIFT

(11) **EP 2 919 704 B1**
(45) Veröffentlichungstag und Bekanntmachung des Hinweises auf die Patenterteilung: **12.10.2016**
(21) Anmeldenummer: 13798571.9
(22) Anmeldetag: 15.11.2013
(51) Int. Cl.: A61C 9/00, A61C 11/08

(54) **SYSTEM UMFASSEND EINE VORRICHTUNG ZUR LAGEFIXIERUNG EINES FORMKÖRPERS, SOWIE GEEIGNETES VERFAHREN HIERFÜR**
SYSTEM COMPRISING A DEVICE FOR POSITIONALLY FIXING A MOULDING, AND SUITABLE METHOD THEREFOR
SYSTÈME COMPRENANT UN DISPOSITIF PERMETTANT DE FIXER UN CORPS MOULÉ DANS UNE POSITION, ET PROCÉDÉ APPROPRIÉ À CET EFFET

(30) Priorität: 15.11.2012 DE 102012111024
(43) Veröffentlichungstag der Anmeldung: 23.09.2015
(73) Patentinhaber: Merz Dental GmbH, 24321 Lütjenburg (DE)
(72) Erfinder: BOROWSKI, Christian, 24111 Kiel (DE); SPALT, Jody Paul, 8405 Winterthur (CH)
(74) Vertreter: Kunz, Herbert
(86) Internationale Anmeldenummer: PCT/EP2013/003457
(87) Internationale Veröffentlichungsnummer: WO 2014/075809

(56) Entgegenhaltungen:
- US-A- 2 070 025
- US-A- 4 744 751
- US-A- 5 611 686
- US-A1- 2007 031 791
- US-B1- 6 640 150

## Beschreibung

Die vorliegende Erfindung betrifft ein System umfassend eine Vorrichtung zur Lagefixierung eines Formkörpers bestehend aus einer Basisfläche mit zumindest einem Fixierungselement für den Formkörper, gemäß dem Oberbegriff des Anspruches 1, sowie ein entsprechendes Verfahren zur Lagefixierung eines Formkörpers, unter Verwendung der Vorrichtung.

Im Bereich der Zahntechnik wird für die Abformung einer Kieferanordnung üblicherweise eine Gebissaufnahmeeinrichtung, welche vorzugsweise löffelartig ausgebildet ist, verwendet, mit der jeweils für den Oberkiefer und den Unterkiefer eine plastische Abformung erfolg, z.B. US 2007/0031791. Nach erfolgter Abformung wird mit Hilfe einer sogenannten Bissgabel die Okklussionsebene festgelegt, mit der anhand eines sogenannten Artikulators die jeweiligen Kieferabformungen voreingestellt und lagerichtig angepasst werden. Abformungen von Kiefer und Zähnen stellen somit die Grundlage für zahntechnische Arbeiten dar. Mit Hilfe dieser Abformungen werden sodann Modelle, z.B. aus Hartgips, erstellt, so dass eine Situation vorliegt, die auch im Mund des Patienten gegeben ist. Zusätzlich wird in einem Artikulator durch eine Bissnahme die Lagebeziehung der Kiefer zueinander ermittelt. Die Modelle werden unterschiedlich für die nachfolgenden Maßnahmen vorbereitet. Bei einem individuellen Abdrucklöffel, einer Biss-Schablone oder einer Prothese wird auf dem Modell direkt gearbeitet. Zur Fertigung von Edelmetallarbeiten wird ein Modell hergestellt, bei dem die einzelnen Zähne getrennt bearbeitet, aber auf den Modellsockel eindeutig zurückgesetzt werden können. Mit dieser Abformung erstellt der Zahntechniker das Arbeitsmodell. Es folgt die Anfertigung von Biss-Schablonen, mit deren Hilfe der Zahnarzt die Relation der Kiefer zueinander einstellt und die Okklusionsebene festlegt. Nach dem Ausbetten wird die Prothese in den Artikulator zurückgesetzt, um gegebenenfalls die Okklusion zu korrigieren, und abschließend ausgearbeitet und poliert.

Bei Artikulatoren, z.B. US 4 744 751, handelt es sich um Geräte zur Simulation der Kiefergelenksbewegung. Dazu werden beispielsweise Gipsmodelle der Zahnbögen des Ober- und Unterkiefers in Okklusion in den Artikulator montiert. Anschließend kann die Bewegung der Kiefer zueinander simuliert werden, was zur Anfertigung von Zahnersatz, Teil- und Totalprothesen oder Schienen unerlässlich ist. Die Verschiebung der Zahnreihen gegeneinander unter Zahnkontakt durch Gleitbewegungen des Unterkiefers lässt sich somit erfassen. Die Form der Gleitbewegungen hängt unter anderem von der Zahnstellung, der Höckerform und der Gelenkbahn im Kiefergelenk ab.

Anstelle der bekannten plastischen Abformung setzte sich in den letzten Jahren am zahntechnischen Markt zunehmend die digitale Abformung durch. Hierbei kann die mechanische Abformung mit Hilfe eines Löffelabdruckes entfallen und die Mundhöhle des Patienten wird lediglich digital erfasst. Zwar hat diese digitale Abformung den Vorteil, dass dem Zahnarzt nahezu in Echtzeit die Möglichkeit gegeben wird, zu erkennen, ob die gewonnenen Daten für einen digitalen Zahnabdruck genügen, jedoch hängt die digitale Güte des Zahnabdrucks von dem verwendeten Computerprogramm und der damit verbunden technischen Ausstattung, aber auch weiteren kostspieligen Anwendungen ab.

Nach Vorliegen der digitalen Abformung, d. h. der digital erfassten Mundhöhle des Patienten, werden anhand dieser die Gegebenheiten des jeweiligen Ober- und Unterkiefers wieder auf herkömmliche Weise hergestellt und im Artikulator unter Zuhilfenahme der ebenfalls verwendeten Bissgabel die Okklussionsstellung erarbeitet. Gleichwohl muss dann der Zahnarzt vor Ort erneut in Abhängigkeit der Präzision und des fehlerfreien Arbeitens des Zahntechnikers die Prothesenteile oder auch Totalprothese zu Ober- und/oder Unterkiefer gegebenenfalls in mehreren Arbeitsgängen anpassen, wobei teilweise, je nach Fehlerhäufigkeit und Ungenauigkeit bei problematischer Okklussionsstellung, die Rückführung der Prothese zu dem Zahntechniker erforderlich wird.

Bei allen gängigen Verfahren, sei es bei der analog-mechanischen oder der digitalen Abformung, ist die jeweils optimale Ausrichtung und Positionierung des Oberkieferzahnersatzes zu dem Unterkieferzahnersatz ein problematischer Schritt. In Abhängigkeit der Genauigkeit der Ausrichtung zwischen Oberkiefer- und Unterkieferzahnersatz sind die jeweiligen Arbeitsschritte sowohl des Zahntechnikers als auch des Zahnarztes beeinflussbar. Somit stellt die Abformung, d. h. der Zahnabdruck das wichtigste Bindeglied zwischen der zahnärztlichen Behandlung am Patienten und der zahntechnischen Arbeit im Labor dar. Dabei spielt die Stabilität und Fixierung des zu bearbeitenden Abformkörpers im Artikulator eine wesentliche Rolle.

Man unterscheidet Mittelwertartikulatoren, teiljustierbare Artikulatoren und Vollwertartikulatoren, wobei sich die verschiedenen Modelle in den Einstellmöglichkeiten bezüglich individueller Justierung des Bennett-Winkels, Gelenkbahnneigung, terminaler Schnarnierachse, Frontzahnführung, usw., unterscheiden. Die meisten Mittelwertartikulatoren bieten jedoch keine individuellen Einstellungen an, wobei im Vergleich dazu alle zu ermittelnden Werte in Vollwertartikulatoren frei justierbar sind. Das Modell wird beim Einartikulieren in der Regel lediglich so ausgerichtet, dass es mit dem Inzisalpunkt an einen Referenzdorn angelegt und die Kauebene parallel zur Tischebene sowie die Medianebene des Modells rechtwinklig zur Kondylenverbindungslinie ausgerichtet ist. Ein Koordinatenursprung mit Bezug zum Gesamtmodell und einzelnen Zahnpositionen ist damit nachteilig nicht gegeben.

Der vorliegenden Erfindung liegt somit die Aufgabe zugrunde, bereits während des Abformungsvorgangs bzw. bei der Präparation eines Dentalmodells ein hohes Maß an Genauigkeit hinsichtlich der jeweiligen Stellung des Oberkieferzahnersatzes zu dem Unterkieferzahnersatz zu gewährleisten und eine geeignete Vorrichtung sowie ein entsprechendes Verfahren bereitzustellen. Eine weitere Aufgabe besteht darin, eine optimale Kenntnis des abzuformenden Ober- und Unterkiefers sowie die entsprechende Positionierung des abgeformten Ober- und Unterkiefers bzw. eine optimale Digitalisierung zu erhalten.

Diese Aufgaben werden vorrichtungsseitig durch die Merkmale gemäß Anspruch 1 und verfahrensseitig durch die Merkmale gemäß Anspruch 10 gelöst.

Ein wesentlicher Aspekt vorliegender Erfindung besteht darin, dass auf der Lagefixierungsvorrichtung für den Formkörper zumindest ein Positionierungsmittel vorgesehen ist, das mit einem Fixierungselement zusammenwirkt, und der Formkörper zumindest eine Positionsmarkierung aufweist, die mit dem Positionierungsmittel zusammenwirkt.

In der Handhabung von Artikulatoren oder Scanvorrichtungen ist es, wie oben erwähnt, wünschenswert, Ober- und Unterteil im Nullpunkt der Okklusion fixieren zu können. Als Lösung wird nach einer Ausbildung der erfindungsgemäßen Vorrichtung ein Positionierungsmittel in Verbindung mit einer Positionsmarkierung, die am Ober- und/oder Unterteil angeordnet ist und welche miteinander lösbar in Eingriff bringbar, sind, vorgeschlagen. Somit sind laterale Bewegungskomponenten von Ober- und Unterteil gegeneinander und in Bezug auf die Gesamtvorrichtung ausgeschlossen. Die zentrisch-statische Position der Okklusion, d.h. der Nullpunkt der Okklusion, ist so in Bezug auf Ober- und Unterteil im Koordinatenursprung der Vorrichtung fixiert.

Es wird ein Elastomerabdruck oder ein Dentalmodell als Formkörper verwendet, der zumindest eine Positionsmarkierung, beispielsweise eine oder mehrere unterseitig bzw. oberseitig angeordnete, furchenartige Ausnehmungen, aufweist. Anhand der zusätzlichen Positionierungsmittel als Bestandteil der Lagefixierungsvorrichtung, welche mit der Basisfläche über die Fixierungsmittel in zumindest formschlüssiger Verbindung stehen, ist es möglich, den jeweiligen Gebissabdruck und/oder das Modell entsprechend der Lagepositionierung in der Vorrichtung nahezu exakt auf einen Koordinatennullpunkt festzulegen, so dass die zahntechnischen Anpassarbeiten auf ein Minimum reduziert werden. Mit diesem Positionierungsmittel ist es im Zusammenwirken, d.h. dem Ineinandergreifen mit der Positionsmarkierung weiterhin möglich, dass die Oberkieferabformung und die Unterkieferabformung bzw. das entsprechende Dentalmodell sowohl horizontal, als auch vertikal mit hoher Präzision und Stabilität an dem Nullpunkt ausgerichtet und verschlüsselt werden können. Dieser Formteilnullpunkt ist der Koordinatenursprung des zu bearbeitenden Formteils auf einer Werkzeugmaschine, beispielsweise einer Abform-Bearbeitungseinrichtung oder einer digitalen Scanvorrichtung. Er wird beispielsweise durch ein entsprechendes NC-Programm aufgenommen und festgelegt. Sämtliche in dem NC-Programm einprogrammierten Weginformationen beziehen sich dabei auf diesen Punkt. Herkömmlicherweise beziehen sich die Positionskoordinaten lediglich auf einzelne Zähne mit Referenz zum Nachbarzahn. Zur Einstellung individueller Patientenwerte am Artikulator werden diese aufwändig als individuelles Registrat am Patienten gemessen.

Weitergehende vorteilhafte Ausgestaltungen sind Gegenstand der Unteransprüche.

Die Lagefixierungsvorrichtung beinhaltet neben dem Positionierungsmittel zumindest ein Fixierungselement und eine Basisfläche. Dabei ist das Fixierungselement bevorzugt eine Ausnehmung, beispielsweise eine Furche innerhalb der Basisfläche. Das Fixierungselement und die Basisfläche stellen somit einen werkzeugseitigen Fixpunkt bereit, der über die Positionierungsmittel mit den Positionsmarkierungen des Formteils in eindeutiger Lagebeziehung steht.

Weiterhin bevorzugt stellt die Basisfläche eine runde Planfläche dar.

Das zumindest eine Positionierungsmittel ist vorzugsweise stabförmig ausgebildet.

Ferner sind die Positionierungsmittel bevorzugt rund ausgestaltet.

Die Oberflächen der Positionierungsmittel sind formschlüssig zu den Fixierungselementen und den Positionsmarkierungen ausgebildet. Wird beispielsweise die Positionsmarkierung im Bodenbereich der jeweiligen Gebissabformung, d.h unter- oder oberseitig, als Ein- bzw. Ausnehmung vorgesehen, so wird anhand der einfachen technischen Umsetzung ein zusätzliches Positionierungsmittel bereitgestellt, welches eine stabile positionierbare Zuordnung des Oberkiefers zum Unterkiefer ermöglicht. Beispielsweise greifen die Positionierstäbe formschlüssig in die Fixierungsfurchen ein.

Dabei sind bevorzugt zumindest 3 Positionierungsmittel, insbesondere in Umfangsrichtung der Basisfläche angeordnet. Es hat sich als besonders vorteilhaft herausgestellt, wenn mindestens drei Positionsmarkierungen und somit 3 Positionierungsmittel in zusätzlich zentrosymmetrischer Anordnung vorgesehen sind, da hiermit die Ausrichtung der jeweiligen Ober- und Unterkiefer optimal gestaltet werden kann. Je nach Größe der zu bearbeitenden Abformung ist es beispielsweise vorteilhaft, fünf Positionsmarkierungen und mithin fünf Positionierungsmittel vorzusehen. Werden insbesondere eine ungerade Anzahl von Positionsmarkierungen ausgebildet, so dass jeweils eine symmetrische Anordnung zu der mittig angeordneten Fixierung möglich ist.

Vorzugsweise sind die Positionierungsmittel kraftschlüssig bzw. rutschfest mit dem Basiselement verbunden.

Die Fixierungselemente sind bevorzugt rotationssymetrisch angeordnet. Auch ist es beispielsweise vorteilhaft, wenn die Positionsmarkierungen bzw. die Positionierungsmittel rotationssymetrisch angeordnet sind, da so die Zuordnung und Positionierung des Ober- und Unterkiefers vereinfacht vorgenommen werden kann. Eine vorteilhafte Anordnung der Positionierungsmarkierung im Labialbereich ermöglicht insbesondere die einfache Einartikulierung für den Zahntechniker.

Weiterhin bevorzugt ist eine Abtastvorrichtung vorgesehen, mit der der Formkörper digital abgetastet wird, beispielsweise ein optoelektronischer Scanner.

Der Formkörper ist bevorzugt ein Abformkörper, vorzugsweise ein Abformkörper für den Zahnersatz bzw. für eine Teil- bzw. Totalprothese. Alternativ ist der Formkörper ein positives Dentalmodell.

Das erfindungsgemäße Verfahren zur Lagefixierung eines Formkörpers, insbesondere unter Verwendung der zuvor beschriebenen Vorrichtung, weist folgende Schritte auf:
a) Bereitstellen einer Basisfläche mit zumindest einem Fixierungselement,
b) Bereitstellen eines Formkörpers mit Positionsmarkierungen, und
c) Bereitstellen von Positionierungsmitteln, so dass die Positionierungsmittel formschlüssig mit dem Fixierungselement und den Positionsmarkierungen zur Lagefixierung des Formkörpers zusammenzuwirken.

Der Formkörper wird dabei bevorzugt über die Lagefixierung digitalisiert, vorzugsweise reproduzierbar digitalisiert.

Vorzugsweise wird der Formkörper abnehmbar auf den Positionierungsmitteln lagefixiert.

Aufgrund der Bereitstellung der Basisfläche, der Fixierelemente und der Positionierungsmittel wird im Zusammenspiel mit den Positionsmarkierungen des Formkörpers während des Digitalisierungsvorgangs eine Anpassung vorgenommen, mit der sowohl die Kieferstellung zueinander, die Zahnstellung zueinander, als auch die horizontale Okklussionsstellung ermittelt und festgelegt bzw. eindeutig fixiert wird. Mit dieser Maßnahme wird erreicht, dass die Fehlerquellen, welche beispielsweise bei einer separaten Abformung eines Oberkiefers und Unterkiefers entstehen können, welche dann aufwendig im Artikulator zahntechnisch nachpräpariert werden müssen, nicht mehr vorliegen. Durch Vorhandensein der Positionsmarkierungen und der Positionierungsmittel kann diesbezüglich auf eine technisch aufwendigere digitale Gesamtabformung in der Mundhöhle verzichtet werden.

Wird darüber hinaus die Positionsmarkierung als sogenannte Flächenpaarung ausgestaltet, so wird die Möglichkeit bereitgestellt, dass sich auch die Flächenpaarung im Artikulator abbildet und somit eine nahezu hundertprozentige Lagepositionierung der Kieferstellung des Ober- bzw. Unterkiefers vorliegt. Die Flächenpaarung der Positionsmarkierung erhöht auch im Zusammenspiel mit einem Bissaufnahmeelement die Lagefixierung, so dass nach Herstellung des Zahnabdrucks keine aufwendige Korrektur des Zahntechnikers im Artikulator vorgenommen werden muss.

Wird darüber hinaus zusätzlich noch eine Bissgabel für die Festlegung der Okklussionsebene herangezogen, so sind nahezu alle möglichen Parameter zur Erstellung eines Zahnabdrucks und somit zur Herstellung von künstlichem Zahnersatz vorliegend, wobei die hierfür erforderliche Abformung der jeweiligen Ober- und Unterkieferkontur in einem Arbeitsschritt erfolgen kann.

Weitere Vorteile, Merkmale und Anwendungsmöglichkeiten der vorliegenden Erfindung ergeben sich aus der folgenden Beschreibung bevorzugter Ausführungsbeispiele in Verbindung mit der Zeichnung. Dabei zeigen:
- Figur 1: die erfindungsgemäße Lagefixierungsvorrichtung in Draufsicht; und
- Figur 2: eine Darstellung der Anordnung einer Gebissabformung als Formkörper auf einer erfindungsgemäßen Lagefixierungsvorrichtung in Draufsicht.

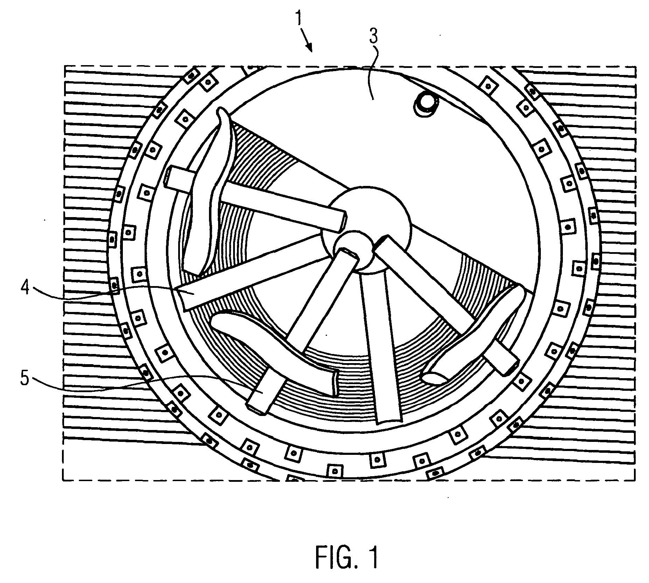

In Figur 1 ist die erfindungsgemäße Lagefixierungsvorrichtung 1 dargestellt, welche in diesem Fall noch keinen Formkörper 2 für den Kiefer aufweist. Die Lagefixierungsvorrichtung 1 weist neben dem Positionierungsmittel 5, das hier ein runder Metallstab ist, zumindest ein Fixierungselement 4 und eine Basisfläche 3 auf. Dabei ist das Fixierungselement 4 bevorzugt eine Ausnehmung, hier als Furche innerhalb der Basisfläche 3 ausgeführt. Weiterhin stellt die Basisfläche 3 eine runde Planfläche dar.

Die Positionierungsmittel 5 wirken formschlüssig mit dem Fixierungselement 4 und den unterseitig eines Formkörpers 2 angeordneten Positionsmarkierungen 6 zur Lagefixierung eines Formkörpers zusammen. Beispielsweise greifen die 3, 5 oder 7 Positionierstäbe formschlüssig in die 3, 5 oder 7 Fixierungsfurchen der Basisfläche 3 und die unterseitigen Positionierungsmarkierungen 6 des Formkörpers 2 ein und fixieren somit dessen Lageposition.

Das Positionierungsmittel 5 gibt somit dem Zahntechniker ein einfaches Instrument an die Hand, unmittelbar die jeweilige Gebisssituation nachzuahmen und entsprechend zu fixieren. Mit der Lagefixierungsvorrichtung 1 in Verbindung mit der Gebissabformung 2 mit zumindest einer Positionsmarkierung 6 und den Positionierungsmitteln 5 wird somit eine bifunktionale Abformbearbeitungseinrichtung bereitgestellt, die neben der gängigen Funktion, d. h. die Abformung der jeweiligen Kieferfunktion, zusätzlich die Funktion der mechanischen und/oder digitalen Lagefixierung des Zahnabdrucks als solches übernimmt. Erfindungsgemäß besteht das Grundkonzept der Lagefixierungsvorrichtung 1 mit der Gebissabformung bzw. dem Dentalmodell als Formkörper 2 darin, dass die Abformung und die stabilisierte und lagerichtige digitale Registrierung der Kiefer in einem Arbeitsgang vorgesehen sind. Es ist somit neben der Abformung beider Kiefer vorteilhaft auch eine mechanische und/oder digitale Bissregistrierung in einem Schritt möglich.

Der Formkörpernullpunkt ist dabei der Koordinatenursprung des zu bearbeitenden Teils auf der Vorrichtung, beispielsweise einem Scanner oder einem Artikulator.

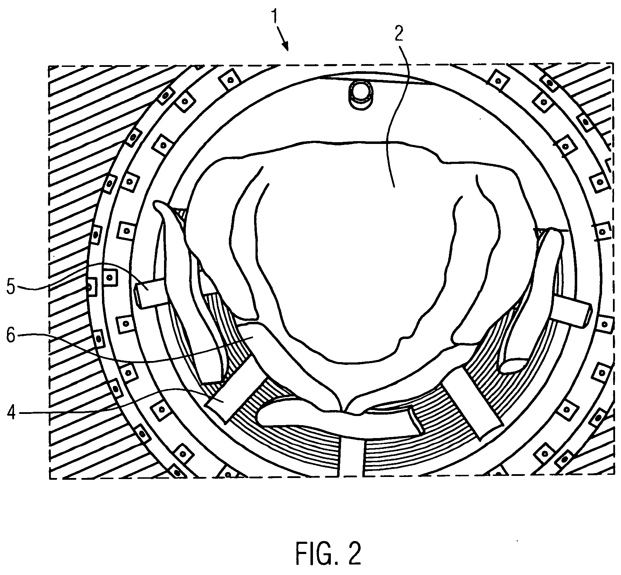

In Figur 2 ist die Ausgestaltung einer Lagefixierungsvorrichtung 1 dargestellt, auf der ein Formkörper 2 oder das Dentalmodell angeordnet ist, wobei hier der Gebissabdruck drei unterseitige Positionsmarkierungen 6 aufweist. Die Positionsmarkierungen 6 sind in dieser Form als Ausnehmungen bzw. Furchen vorgesehen, die sich von palatinal zu labial erstrecken und wobei vorzugsweise die vestibulär angeordnete Ausnehmung mittig bzw. rotationssymmetrisch angeordnet ist.

Zunächst kann zusätzlich beispielsweise der Oberkiefer mittels Bissgabel und anhand schädelbezüglicher Referenzen lagerichtig positioniert werden. Hierbei dient als Schlüssel eine Abformmasse, die als Träger bestimmter Situationsdaten vorgesehen ist, welche über die Positionsmarkierungen 6 erzeugt werden können und somit Information hinsichtlich der Okklusionsebene enthält. Nach der Vorpositionierung mit allen wichtigen Referenzpunkten wird die Funktionsabformung durchgeführt, dass heißt nach Einsetzen der Gebissabdruckvorrichtung sowohl für den Ober-, als auch für den Unterkiefer, welcher die entsprechenden Positionsmarkierungen 6 aufweist, wird ein Bissaufnahmeelement zwischen den Oberkiefer-Gebissaufnameeinrichtung und Unterkiefer-Gebissaufnameeinrichtung positioniert, wodurch der Bezug beider Gebissaufnahmeeinrichtungen hergestellt und somit über das Bissaufnahmeelement bereit gestellt wird. Mit Hilfe eines harten Silikons wird so der Unterkiefer horizontal und vertikal zum Oberkiefer ausgerichtet und verschlüsselt. Hierbei spielen insbesondere die Positionsmarkierungen 6 und die Positionierungsstäbe 5 eine besondere Verschlüsselungsrolle, da über die Positionsmarkierungen 6 und die Positionierungsstäbe 5 die Lagefixierung des Ober- und Unterkiefers eine optimale räumliche Fixierung erlauben, wodurch mit einem Abformvorgang alle notwendigen Referenzpunkte vorliegen, die die zahntechnische und zahnärztliche Nachbehandlung auf ein Minimum reduzieren. Der nachgeschaltete Abtastvorgang zur Erstellung eines digitalen Abdrucks erfolgt somit unter genauer Erfassung des lagefixierten Koordinatenursprungs des Formkörpers 2 in der Vorrichtung 1.

Sämtliche in den vorliegenden Unterlagen offenbarten technischen Merkmale werden als erfindungswesentlich beansprucht.

## Patentansprüche

1. System (1) umfassend eine Vorrichtung zur Lagefixierung eines Formkörpers (2) bestehend aus einer Lagefixierungseinrichtung mit einer Basisfläche (3) mit zumindest einem Fixierungselement (4) für den Formkörper, sowie dem auf der Lagefixierungseinrichtung angeordneten Formkörper, wobei zumindest ein Positionierungsmittel (5) vorgesehen ist, das mit dem Fixierungselement (4) zusammenwirkt, und der Formkörper (2) zumindest eine Positionsmarkierung aufweist, die mit dem Positionierungsmittel (5) zusammenwirkt, **dadurch gekennzeichnet, dass** die Oberfläche der Positionierungsmittel (5) formschlüssig zu den Fixierungselementen (4) und den Positionsmarkierungen ausgestaltet ist, wobei das Fixierungselement (4) und die Positionsmarkierung als Ausnehmung ausgebildet ist und das Positionierungsmittel (5) in der Ausnehmung des Fixierungselements und der Ausnehmung der Positionsmarkierung aufgenommen ist.

2. System (1) nach Anspruch 1, **dadurch gekennzeichnet, dass** die Basisfläche (3) eine runde Planfläche ist.

3. System (1) nach einem der Ansprüche 1 bis 2, **dadurch gekennzeichnet, dass** das/die Positionierungsmittel (5) stabförmig ausgebildet ist/sind.

4. System (1) nach einem der Ansprüche 1 bis 3, **dadurch gekennzeichnet, dass** die Positionierungsmittel (5) rund ausgestaltet sind.

5. System (1) nach einem der Ansprüche 1 bis 4, **dadurch gekennzeichnet, dass** zumindest 3 Positionierungsmittel (5), vorzugsweise in Umfangsrichtung, angeordnet sind.

6. System (1) nach einem der Ansprüche 1 bis 5, **dadurch gekennzeichnet, dass** das/die Positionierungsmittel (5) kraftschlüssig bzw. rutschfest mit der Basisfläche (3) verbunden ist/sind.

7. System (1) nach einem der Ansprüche 1 bis 6, **dadurch gekennzeichnet, dass** die Fixierungselemente (4) rotationssymmetrisch angeordnet sind.

8. System (1) nach einem der Ansprüche 1 bis 7, **dadurch gekennzeichnet, dass** eine Abtastvorrichtung vorgesehen ist, mit der der Formkörper (2) digital abgetastet wird.

9. System (1) nach einem der Ansprüche 1 bis 8, **dadurch gekennzeichnet, dass** der Formkörper (2) ein Abformkörper, vorzugsweise ein Abformkörper für den Zahnersatz bzw. Teil- bzw. Totalprothese, ist.

10. Verfahren zur Lagefixierung eines Formkörpers (2) unter Verwendung eines Systems (1) nach einem der Ansprüche 1 bis 9, welches die Schritte aufweist:
a. Bereitstellen einer Basisfläche (3) mit zumindest einem Fixierungselement (4)
b. Bereitstellen eines Formkörpers (2) mit Positionsmarkierungen
c. Bereitstellen von Positionierungsmittel (5), so dass die Positionierungsmittel (5) formschlüssig mit dem Fixierungselement (4) und den Positionsmarkierungen zur Lagefixierung des Formkörpers (2) zusammenwirken.

11. Verfahren nach Anspruch 10, **dadurch gekennzeichnet, dass** der Formkörper (2) über die Lagefixierung digitalisiert, vorzugsweise reproduzierbar digitalisiert, wird.

12. Verfahren nach einem der Ansprüche 10 oder 11, **dadurch gekennzeichnet, dass** der Formkörper (2) abnehmbar auf dem/den Positionierungsmittel/n (5) lagefixiert ist.

## Claims

1. System (1) comprising a device for positionally fixing a moulding (2), composed of a positional fixing device having a base surface (3) with at least one fixing element (4) for the moulding, and the moulding arranged on the positional fixing device, wherein at least one positioning means (5) is provided, which cooperates with the fixing element (4), and the moulding (2) has at least one position marking, which cooperates with the positioning means (5), **characterized in that** the surface of the positioning means (5) is designed for form-fit engagement with the fixing elements (4) and the position markings, the fixing element (4) and the position marking being designed as a recess, and the positioning means (5) being received in the recess of the fixing element and the recess of the position marking.

2. System (1) according to Claim 1, **characterized in that** the base surface (3) is a round plane surface.

3. System (1) according to either of Claims 1 and 2, **characterized in that** the one or more positioning means (5) are formed with a rod shape.

4. System (1) according to one of Claims 1 to 3, **characterized in that** the positioning means (5) are round.

5. System (1) according to one of Claims 1 to 4, **characterized in that** at last 3 positioning means (5) are arranged preferably in a circumferential direction.

6. System (1) according to one of Claims 1 to 5, **characterized in that** the one or more positioning means (5) are connected to the base surface (3) with force-fit or non-slip engagement.

7. System (1) according to one of Claims 1 to 6, **characterized in that** the fixing elements (4) are arranged rotationally symmetrically.

8. System (1) according to one of Claims 1 to 7, **characterized in that** a scanning device is provided, with which the moulding (2) is scanned digitally.

9. System (1) according to one of Claims 1 to 8, **characterized in that** the moulding (2) is an impression body, preferably an impression body for the artificial tooth or partial or total prosthesis.

10. Method for positionally fixing a moulding (2) using a system (1) according to one of Claims 1 to 9, said method comprising the steps of:
a. making available a base surface (3) with at least one fixing element (4),
b. making available a moulding (2) with position markings,
c. making available positioning means (5), such that the positioning means (5) cooperate with the fixing element (4) and the position markings with form-fit engagement for positionally fixing the moulding (2).

11. Method according to Claim 10, **characterized in that** the moulding (2) is digitalized, preferably reproducibly digitalized, via the positional fixing.

12. Method according to either of Claims 10 and 11, **characterized in that** the moulding (2) is positionally fixed on the one or more positioning means (5) in a detachable manner.

## Revendications

1. Système (1) comprenant un dispositif permettant de fixer un corps moulé (2) dans une position, composé d'un dispositif de fixation en position avec une surface de base (3) dotée d'au moins un élément de fixation (4) pour le corps moulé, ainsi que du corps moulé disposé sur le dispositif de fixation en position, au moins un moyen de positionnement (5) étant prévu, celui-ci interagissant avec l'élément de fixation (4) et le corps moulé (2) comportant au moins un marquage de position interagissant avec le moyen de positionnement (5), **caractérisé en ce que** la surface des moyens de positionnement (5) est réalisée par complémentarité de formes par rapport aux éléments de fixation (4) et aux marquages de position, l'élément de fixation (4) et le marquage de position étant réalisés sous la forme d'un évidement et le moyen de positionnement (5) étant logé dans l'évidement de l'élément de fixation et dans l'évidement du marquage de position.

2. Système (1) selon la revendication 1, **caractérisé en ce que** la surface de base (3) est une surface plane ronde.

3. Système (1) selon l'une quelconque des revendications 1 à 2, **caractérisé en ce que** le ou les moyens de positionnement (5) sont réalisés en forme de tige.

4. Système (1) selon l'une quelconque des revendications 1 à 3, **caractérisé en ce que** les moyens de positionnement (5) sont configurés de façon ronde.

5. Système (1) selon l'une quelconque des revendications 1 à 4, **caractérisé en ce qu'**au moins 3 moyens de positionnement (5) sont disposés de préférence dans la direction circonférentielle.

6. Système (1) selon l'une quelconque des revendications 1 à 5, **caractérisé en ce que** le ou les moyens de positionnement (5) sont reliés par complémentarité de forces et/ou de façon antidérapante avec la surface de base (3).

7. Système (1) selon l'une quelconque des revendications 1 à 6, **caractérisé en ce que** les éléments de fixation (4) sont disposés symétriquement en rotation.

8. Système (1) selon l'une quelconque des revendications 1 à 7, **caractérisé en ce qu'**un dispositif de palpation est prévu à l'aide duquel le corps moulé (2) est palpé de façon numérique.

9. Système (1) selon l'une quelconque des revendications 1 à 8, **caractérisé en ce que** le corps moulé (2) est un corps déformable, de préférence un corps déformable pour la prothèse dentaire et/ou la prothèse partielle et/ou totale.

10. Procédé de fixation d'un corps moulé (2) dans sa position en utilisant un système (1) selon l'une quelconque des revendications 1 à 9, comportant les étapes suivantes :
a. mise à disposition d'une surface de base (3) avec au moins un élément de fixation (4) ;
b. mise à disposition d'un corps moulé (2) avec des marquages de position ;
c. mise à disposition de moyens de positionnement (5), de sorte que les moyens de positionnement (5) interagissent par complémentarité de formes avec l'élément de fixation (4) et les marquages de position pour fixer le corps moulé (2) dans sa position.

11. Procédé selon la revendication 10, **caractérisé en ce que** le corps moulé (2) est numérisé au-dessus de la fixation en position, de préférence numérisé de façon reproductible.

12. Procédé selon l'une quelconque des revendications 10 ou 11, **caractérisé en ce que** le corps moulé (2) est fixé dans sa position de façon amovible sur le ou les moyens de positionnement (5).
